# EUROPEAN PATENT SPECIFICATION

(11) **EP 1 656 862 B1**
(45) Date of publication and mention of the grant of the patent: **29.08.2007**
(21) Application number: 05110480.0
(22) Date of filing: 08.11.2005
(51) Int. Cl.: A47J 31/44

(54) **Steam dispenser for preparing hot and/or frothed beverages**
Dampfspendevorrichtung für die Zubereitung von heissen und/oder aufgeschäumten Gretränken
Distributeur de vapeur pour la préparation de boissons chaudes et/ou moussées

(30) Priority: 10.11.2004 IT TO20040148 U
(43) Date of publication of application: 17.05.2006
(73) Proprietor: RANCILIO MACCHINE PER CAFFE' S.p.A., I-20010 Villastanza di Parabiago (Milano) (IT)
(72) Inventor: Carbonini, Carlo, 20010, VILLASTANZA DI PARABIAGO (MI) (IT)
(74) Representative: Robba, Pierpaolo

(56) References cited:
- FR-A- 2 220 220
- FR-A- 2 559 663

## Description

### Field of the invention

The present invention relates to a steam dispenser for preparing hot and/or frothed beverages; as an example but not necessarily such dispenser can be mounted on espresso or bar machines, for supplying hot frothed milk to be used for example for preparing cappuccino.

The present invention moreover relates to a machine for preparing hot and/or frothed beverages on which one or more previously defined dispensers are installed.

### Background art

The above mentioned machines are generally characterised by being able to supply coffee, hot water and steam through suitable devices variously designed and controlled, a variable number of said devices being mounted on a machine depending on the performances required on the particular place where they are installed.

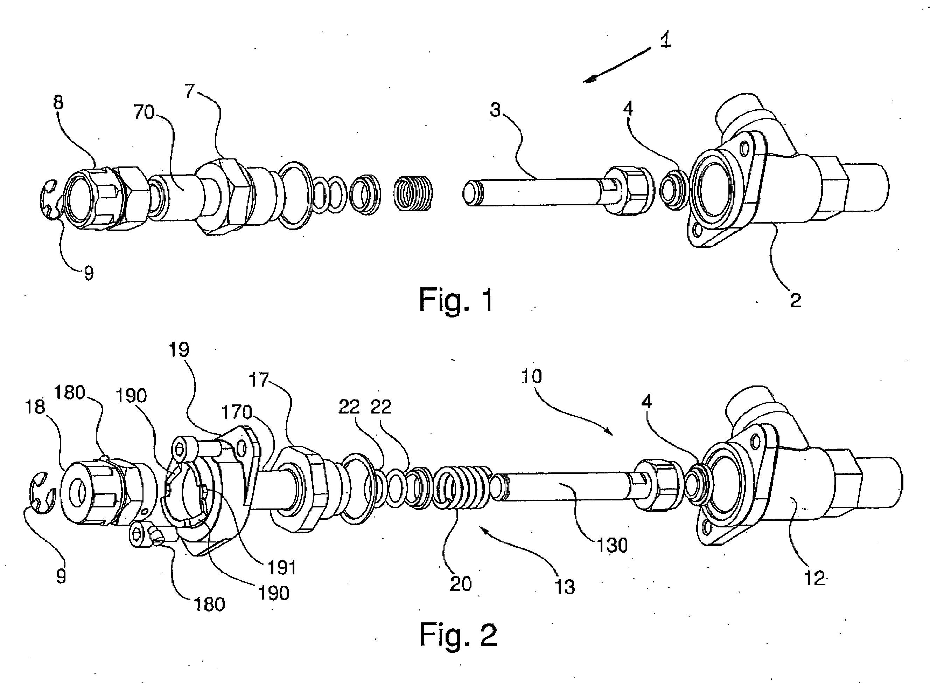

Figure 1 schematically shows an example of a steam dispenser used on certain coffee machines according to the background art, such machines generally being of less complete and cheaper kinds.

Such dispenser, referred to as with the overall reference 1, comprises an outer housing 2 defining inside itself a steam duct - not shown- in which the steam coming from a steam source - not shown- can flow.

The steam duct can be closed or opened by shifting a slider 3 longitudinally to itself, so as to close or to open a nozzle or hole, made inside the outer housing 2 and from which the steam can be discharged after being flown through the steam duct. A closure seal 4 is mounted on an end of the slider 3.

On the outer housing 2 a threaded male body 7 is fixed.

At an end of the slider 3 a threaded bushing 8 is fixed through a blocking spring 9 that prevents the axial sliding of bushing 8 relative to the slider.

By screwing and unscrewing the threaded bushing 8 on the male threaded body 7, the slider 3 is made to slide longitudinally to itself and the dispenser 1 can be closed or opened, like a tap.

A further example of steam dispenser is disclosed in Patent Publication FR-A-2559663. Such a known dispenser comprises a steam duct having at one end a cam apt to move a slider by rotating the steam duct itself.

In the last years, the beverage commonly known as "cappuccino" was subjected to a real "fashion effect", widening its popularity and becoming a real must in people's habits.

The markets that have been more affected than others by this effect are the United States and China, which somehow reinterpreted the beverage so that the latter is now different in some aspects from the typical one to which Italian customers are used; the most relevant difference can be found in the way of drinking the beverage "cappuccino": reserved as a breakfast in the morning hours for an Italian customer, for an American customer it becomes a real all-hours beverage.

Therefore tastes and flavours changed (nowadays a choice of a number of aromas and garnishings is available), containers (ranging from the usual cup to disposable glasses with several isolation degrees), but the most visible aspect is above all the amount of used milk, that grew enormously.

In order to make a comparison, an Italian "cappuccino" is made with approximately 60 - 70 cc of milk, while for the American version 300-400 cc of milk are used, or even 500 cc in some cases.

From this fact one can readily understand the needs to be met by devices for heating and frothing milk: operation times must necessarily be reduced, the operator's movements must be fast, precise and as limited as possible.

A known dispenser like the one shown in Figure 1 for preparing cappuccino does not allow particularly fast operations, especially if steam flow rates have to be reached quickly.

Therefore several devices have been developed able to simplify the required operations, trying to make their use possible also by non-skilled staff.

Only some of these devices actually satisfy such requirements, and are actually performant as demanded, but generally all of them are affected by an obvious complexity that makes the assembly quite elaborate and therefore expensive, as well as scarcely reliable and however requiring important maintenance operations for a correct functionment.

A further weak point of most of such devices lies in the fact that the control is almost fully electronic and therefore the installation is usually left for top-level machines, they too being provided with an electronic control, for optimizing components set on the machine and for a better impact of the system on the cost of the whole product.

From that it follows therefore that the product ranges with poorest equipment and low level ranges cannot adsorb such a cost impact.

An object of the present invention is providing a device for supplying steam that allows producing machines, for preparing warm beverages, that have a simple construction and can be used by an operator with faster operations.

### Summary of the invention

According to a first aspect of the present invention, this object is achieved with a device having the features according to claim 1.

According to a second aspect of the present invention, this object is achieved with a machine for preparing hot and/or frothed beverages having the features according to claim 8.

The cam device allows the stroke for opening and fully closing the dispenser with a rotation angle -or however with a displacement- of the cam follower relative to the cam track smaller than in the known manually driven steam dispensers described above, allowing an operator to work faster.

Further advantages of the present invention will appear more evident from the following detailed description of a preferred but not limiting embodiment, showed in the following Figures.

### List of Figures

- Figure 1 schematically shows an exploded view of a steam dispenser according to the
prior art;
- Figure 2 schematically shows an exploded view of a steam dispenser according to a preferred embodiment of the present invention;
- Figure 3 schematically shows a side view, partially in cross-section, of the dispenser of Figure 2.

### Detailed description

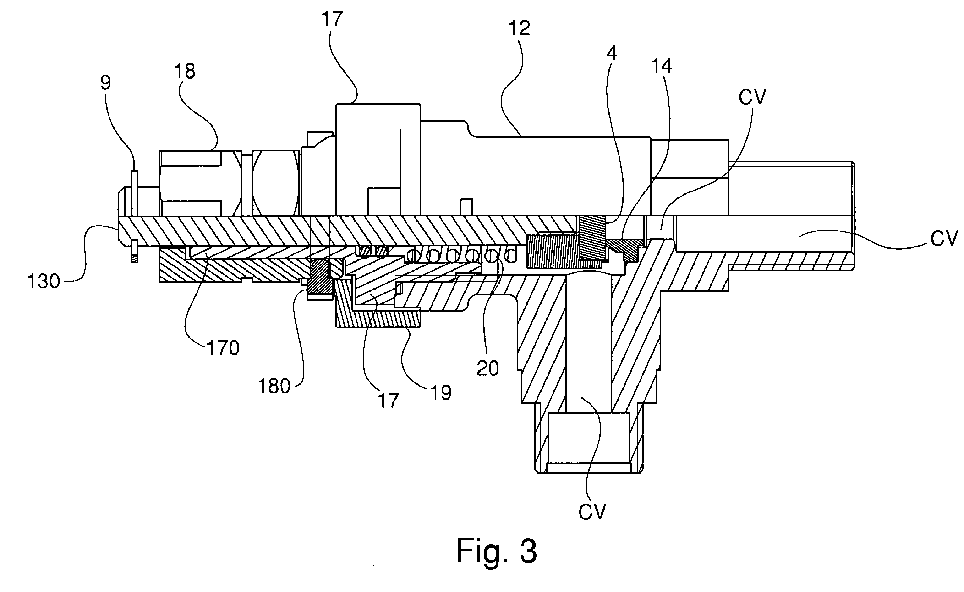

Figures 2,3 show a dispenser according to the present invention: such dispenser, referred to with the overall reference 10, comprises a first outer housing element 12 that defines inside itself a steam duct CV (Figure 3) suitable for allowing the steam coming from a steam source - not shown- to flow through the duct itself.

The steam duct CV can be closed or opened by making a slider 13 to translate longitudinally to itself, so as to close or to open a nozzle or hole 14 (Figure 3), made inside the outer housing 12 and from which the steam can be discharged after having flown along the steam duct.

The slider 3 comprises a shaft 130 at an end of which a closure seal 4 is mounted.

On the outer housing 12 a hollow shaft bushing 17 is fixed.

A control bushing 18 is fitted at an end of the shaft 130 through a blocking spring 9 that prevents the axial sliding of the control bushing 18 relative to the shaft 130.

The control bushing 18 is fitted on the tubular end 170 of the hollow shaft bushing 17, so as to be rotatable around the axis of the shaft 130.

According to the present invention, on the hollow shaft bushing a second outer housing element 19 is fitted, on which element in the present embodiment two cam tracks 190 are provided extending around the axis of the shaft 130; moreover on the control bushing 18 two dowels 180 are fixed (Figure 2), radially protruding from the bushing 18 and in such position so as to be slidable each of them along a cam track 190 and realizing a cam device.

By rotating - for example by means of a knob, not shown- the control bushing 18 around the longitudinal axis of shaft 130 the cam device makes the shaft 130 to translate axially so as to close or to open the nozzle 14, thereby preventing or controlling the steam flow in the steam duct CV from a steam source, not shown and supplying the dispenser 10, towards a steam consumption location and/or device that as an example can be an external spout for supplying steam in a coffee machine.

In the present preferred embodiment, the seal 4 and the edges of the inner nozzle 14 are shaped so as to allow the opening of the passage cross-section and the throttling degree of the steam duct CV to be continuously adjusted, or however so as to realize various throttling degrees.

A returning spring 20 - or an other suitable elastic recovery element 20 - constantly pushes the shaft 130 towards the right - with reference to Figure 2- so as to keep the dowels 180 constantly adherent to the cam tracks 190 and the closure seal 4 pressed against the inner nozzle 14 when the latter must be closed.

References 21, 22 indicate respectively a seal and two O-rings providing suitable tightness.

The cam tracks 190, suitably shaped, can allow various responsiveness degrees of the system: steeper and more accentuated tracks allow the steam duct to be opened promptly and generously with minimal rotations of the control bushing 18; on the contrary less accentuated cam tracks can allow softer openings and render therefore the dispenser more suitable for more precise actuations.

In any case, with the present invention a very rapid longitudinal sliding of the slider 30 can be obtained with little effort, after that an automatic closing of the steam duct CV can follow, that is driven by only releasing the returning spring 20, which was loaded during the previous opening movement. To that purpose cam tracks 190 can define as an example suitable recesses or hooking zones 191 (Figure 2) suitable for reversibly blocking the dowel 180 in suitable predetermined angular positions.

Moreover the present invention allows providing supplies having a wide variety of operation and performances, simply choosing the most suitable shape of the cam tracks 190; some preferred embodiments can be the following:
- double symmetrical profile cam: in this case the dispenser can be opened by turning the knob either clockwise or counter-clockwise;
- double asymmetric profile cam: it allows a differentiated opening of the dispenser (e.g.: opening with clockwise blocking and opening with automatic counter-clockwise return)
- simple profile cam: opening in one direction only and automatic return;
- simple profile cam with multiple positions: opening in one direction only and automatic return up to a predetermined angular position + an extra-stroke with blocking in an opened position (for supplying steam with great amounts of milk and corresponding long warming-up times).

The cam drive system according to the present invention allows an operator to supply steam by turning the traditional knob by a few degrees (15°- 90°) instead of the current 300°-750°, which represents an easing for operators.

Moreover the present system, since it can be made with quite a simple construction, can be applied on a whole product range, from the most complete and expensive models to the cheapest ones, with a very small impact on the production costs.

Another advantage lies in that a dispenser according to the present invention can be made so as to differ for example from the traditional version of Figure 1 due to the substitution of a few components; this allows the dispenser to be used also on machines already installed and working by clients to which, therefore, a performance upgrading of their equipment can be offered without expensive modifications and with very fast execution times.

## Claims

1. Steam dispenser (10) comprising:
- a steam duct (CV) suitable for putting a steam source and a steam consumption location and/or device in fluid communication with each other;
- a slider (13) suitable for opening and closing the steam duct (CV), at least with a translation movement, so as to allow and prevent respectively the passage of the steam through the steam duct (CV) ;
and a cam device (180, 190) suitable for driving the slider (13) so as to cause the opening and the closing of the steam duct (CV);
**characterised in that** the cam device (180, 190) comprises at least a cam track (190) extending around a predetermined rotation axis and at least a cam follower (180) suitable for sliding on the cam track (190) by rotating around the predetermined rotation axis.

2. Dispenser according to claims 1, **characterised by** comprising at least one elastic returning element (20) suitable, at least in a condition of the cam device, for driving the slider so as to cause the latter to open and/or to close the steam duct, at least by translating.

3. Dispenser according to one or more preceding claims, **characterised in that** in order to pass from the complete closing to the complete opening of the steam duct (CV) the at least one cam follower (180) must be rotated by an angle not greater than 180°.

4. Dispenser according to claim 3, **characterised in that** in order to pass from the complete closing to the complete opening of the steam duct (CV) the at least one cam follower (180) must be rotated by an angle not greater than 90°.

5. Dispenser according to one or more claims 1 to 4, **characterised in that** the cam track (190) comprises one or more recess zones (191) suitable to hook the at least one cam follower (180) and to block the cam device (180, 190) in a predetermined position.

6. Dispenser according to one or more preceding claims, **characterised by** comprising:
- an outer housing (12) defining inside itself at least a part of the steam duct (CV);
- an inner nozzle (14), enclosed inside of the outer housing (12), fluidically arranged along the steam duct (CV) and suitable for allowing the steam coming from the steam source to flow;
and in that the slider (13) is suitable for opening and closing the inner nozzle (14) by being pressed against the latter.

7. Machine for preparing hot and/or frothed beverages, **characterised by** comprising at least one steam dispenser (10) according to one or more preceding claims.

8. Machine according to claim 7, **characterised by** comprising at least a steam generator suitable for supplying steam to the at least one steam dispenser (10)

9. Machine according to claim 7 or 8, **characterised by** comprising at least a knob and/or a slider and/or a lever that can be manually driven and that can drive the at least one steam dispenser.

## Patentansprüche

1. Dampfspendevorrichtung (10), die Folgendes umfasst:
- eine Dampfverschraubung (CV), die dazu geeignet ist, eine Dampfquelle und eine Dampfverbrauchsstelle und/oder eine Dampfverbrauchsvorrichtung in Verbindung miteinander zu bringen;
- einen Schieber (13), der zum Öffnen und Schließen der Dampfverschraubung (CV) mit mindestens einer Translationsbewegung geeignet ist, um so jeweils den Durchgang vom Dampf durch die Dampfverschraubung (CV) zu erlauben oder zu unterbinden;
sowie einen Nockentrieb (180, 190), der den Schieber (13) zweckdienlich betätigt, um so das Öffnen und Schließen der Dampfverschraubung (CV) zu bewirken,
**dadurch gekennzeichnet, dass** der Nockentrieb (180, 190) mindestens eine Nockenbahn (190) aufweist, die eine vorbestimmte Drehachse umschließt sowie mindestens einen Steuernocken (180), der geeignet ist, durch Rotation um die vorbestimmte Drehachse auf der Nockenbahn (190) zu gleiten.

2. Spendevorrichtung nach Anspruch 1,
**dadurch gekennzeichnet, dass** sie mindestens ein elastisches Rückholelement (20) aufweist, das mindestens unter den Bedingungen des Nockentriebs geeignet ist, den Schieber zu betätigen, um so Letzteren zu veranlassen, die Dampfverschraubung zu öffnen und/oder zu schließen, mindestens durch Verschiebung.

3. Spendevorrichtung nach einem oder mehreren der vorhergehenden Ansprüche,
**dadurch gekennzeichnet, dass** zur Abwicklung von vollständiger Schließung zu vollständiger Öffnung der Dampfverschraubung (CV) der mindestens eine Steuernocken (180) um einen 180° nicht überschreitenden Winkel verdreht werden muss.

4. Spendevorrichtung nach Anspruch 3,
**dadurch gekennzeichnet, dass** zur Abwicklung von vollständiger Schließung zu vollständiger Öffnung der Dampfverschraubung (CV) der mindestens eine Steuernocken (180) um einen 90° nicht überschreitenden Winkel verdreht werden muss.

5. Spendevorrichtung nach einem oder mehreren der Ansprüche 1 bis 4,
**dadurch gekennzeichnet, dass** die Nockenbahn (190) eine oder mehrere Aussparungen (191) aufweist, die sich dazu eignen, zumindest einen Steuernocken (180) einrasten zu lassen und die Nockensteuerung (180, 190) in einer vorgewählten Position zu blockieren.

6. Spendevorrichtung nach einer oder mehreren der vorhergehenden Ansprüche,
**dadurch gekennzeichnet, dass** sie Folgendes umfasst:
- eine Ummantelung (12), die im Inneren mindestens einen Teil der Dampfverschraubung (CV) enthält;
- eine innere, innerhalb der Ummantelung (12) liegende Tülle (14), die fluidisch im Strömungskanal (CV) angeordnet und dazu geeignet ist, den von der Dampfquelle kommenden Dampf durchströmen zu lassen;
sowie **dadurch**, dass der Schieber (13) zweckdienlich die innere Tülle (14) durch Anpressung gegen Letztere öffnet oder schließt.

7. Gerät für die Zubereitung von heißen und/oder aufgeschäumten Getränken,
**dadurch gekennzeichnet, dass** es mindestens eine Dampfspendevorrichtung nach einem oder mehreren der vorangehenden Ansprüche aufweist.

8. Gerät nach Anspruch 7,
**dadurch gekennzeichnet, dass** es mindestens einen Dampferzeuger umfasst, der zur Versorgung der mindestens einen Dampfspendevorrichtung (10) geeignet ist.

9. Gerät nach Anspruch 7 oder 8,
**dadurch gekennzeichnet, dass** es mindestens einen Griff und/oder einen Schieber und/oder einen Hebel aufweist, der von Hand betätigt werden kann und der mindestens eine Dampfspendevorrichtung bedienen kann.

## Revendications

1. Distributeur de vapeur (10) comprenant :
- un conduit de vapeur (CV) approprié pour mettre une source de vapeur et un lieu et/ou un dispositif de consommation de vapeur en communication de fluide l'un avec l'autre ;
- un bloc coulissant (13) approprié pour ouvrir et fermer le conduit de vapeur (CV), avec au moins un mouvement de translation, de façon à permettre et à empêcher respectivement le passage de la vapeur à travers le conduit de vapeur (CV) ;
- et un dispositif à came (180, 190) approprié pour commander le bloc coulissant de façon à entraîner l'ouverture et la fermeture du conduit de vapeur (CV) ;
**caractérisé en ce que** le dispositif à came (180, 190) comporte au moins une piste de came (190) s'étendant autour d'un axe de rotation prédéterminé et au moins un suiveur de came (180) approprié pour coulisser sur la piste de came (190) en tournant autour de l'axe de rotation prédéterminé.

2. Distributeur selon la revendication 1, **caractérisé en ce qu'**il comprend au moins un élément de rappel élastique (20) approprié, au moins dans un état du dispositif à came, pour entraîner le bloc coulissant de façon à entraîner ce dernier à ouvrir et/ou à fermer le conduit de vapeur, au moins par translation.

3. Distributeur selon l'une quelconque des revendications précédentes, **caractérisé en ce que**, afin de passer de la fermeture totale à l'ouverture totale du conduit de vapeur (CV), le (les) suiveur(s) de came (180) doit (doivent) être tourné (s) d'un angle qui n'est pas supérieur à 180°.

4. Distributeur selon la revendication 3, **caractérisé en ce que**, afin de passer de la fermeture totale à l'ouverture totale du conduit de vapeur (CV), le (les) suiveur(s) de came (180) doit (doivent) être tourné(s) d'un angle qui n'est pas supérieur à 90°.

5. Distributeur selon l'une ou plusieurs des revendications 1 à 4, **caractérisé en ce que** la piste de came (190) comporte une ou plusieurs zone(s) d'évidement (191) appropriée(s) pour crocheter le (les) suiveur(s) de came (180) et pour bloquer le dispositif à came (180, 190) dans une position prédéterminée.

6. Distributeur selon une ou plusieurs des revendications précédentes, **caractérisé par** le fait de comprendre :
- un logement extérieur (12) définissant en lui-même au moins une partie du conduit de vapeur (CV) ;
- une buse interne (14), enfermée à l'intérieur du logement extérieur (12), disposée de façon fluidique le long du conduit de vapeur (CV) et appropriée pour permettre à la vapeur venant de la source de vapeur de s'écouler ;
- et en ce que le bloc coulissant (13) est approprié pour ouvrir et fermer la buse interne (14) en s'appuyant contre cette dernière.

7. Machine pour préparer des boissons chaudes et/ou glacées, **caractérisée par** le fait de comporter au moins un distributeur de vapeur (10) selon l'une ou plusieurs des revendications précédentes.

8. Machine selon la revendication 7, **caractérisée par** le fait de comporter au moins un générateur de vapeur approprié pour fournir de la vapeur à au moins un distributeur de vapeur (10).

9. Machine selon la revendication 7 ou 8, **caractérisée par** le fait de comporter au moins une molette et/ou un bloc coulissant et/ou un levier qui peuvent être commandés manuellement qui peuvent commander le (les) distributeur(s) de vapeur.
